Europäisches Patentamt

European Patent Office

Office européen des brevets

(19)

(11) EP 0 632 197 B1

(12) # FASCICULE DE BREVET EUROPEEN

(45) Date de publication et mention
de la délivrance du brevet:
**30.07.1997 Bulletin 1997/31**

(51) Int Cl.⁶: **F02K 9/97**

(21) Numéro de dépôt: **94401179.0**

(22) Date de dépôt: **27.05.1994**

(54) **Tuyère de moteur-fusée à diffuseur éjectable**

Raketendüse mit abwerfbarem Diffusor

Rocket nozzle with ejectable diffuser

(84) Etats contractants désignés:
**DE SE**

(30) Priorité: **28.05.1993 FR 9306454**

(43) Date de publication de la demande:
**04.01.1995 Bulletin 1995/01**

(73) Titulaire: **SOCIETE EUROPEENNE DE PROPULSION**
**92150 Suresnes (FR)**

(72) Inventeurs:
• **Desclos, Pierre**
**F-27200 Vernon (FR)**
• **Beaurain, André**
**F-60230 Chambly (FR)**
• **Bonniot, Claude**
**F-27200 Vernon (FR)**
• **Vuillamy, Didier**
**F-76230 Quincampoix (FR)**
• **Tiret, Etienne**
**F-27950 La Chapelle Reanville (FR)**

(74) Mandataire: **Thévenet, Jean-Bruno et al**
**Cabinet Beau de Loménie**
**158, rue de l'Université**
**75340 Paris Cédex 07 (FR)**

(56) Documents cités:
FR-A- 2 457 390          FR-A- 2 503 794
FR-A- 2 568 316          FR-A- 2 618 488
US-A- 3 925 982

• JOURNAL OF PROPULSION AND POWER.,
vol.8, no.6, Novembre 1992, NEW YORK pages
1239 - 1244 J.H.FRIDDELL, M.E.FRANKE
'Confined jet thrust vector control nozzle
studies'

**Description**

Domaine de l'invention

L'invention concerne les tuyères de moteurs-fusées et plus particulièrement les tuyères destinées à fonctionner dans un milieu extérieur à pression variable et comportant des moyens d'adaptation du divergent aux conditions ambiantes variables du vol.

Art antérieur

L'adaptation rigoureuse d'une tuyère de moteur-fusée utilisée pour propulser un premier étage de lanceur ne peut être obtenue, pour un régime donné, qu'à une seule altitude correspondant à une pression ambiante déterminée. Les tuyères sont généralement optimisées en fonction des performances globales de l'étage, ce qui conduit la plupart du temps à des tuyères sur-détendues dont la poussée sera maximale à une altitude relativement élevée dite d'adaptation. A l'altitude d'adaptation, la pression statique des gaz Pe dans la section de sortie de la tuyère devient égale à la pression ambiante Pa qui est relativement faible. L'altitude d'adaptation peut être située par exemple à une dizaine de kilomètres du sol. Pour toute la phase du vol depuis le sol jusqu'à l'altitude d'adaptation, la pression statique des gaz Pe dans la section de sortie de la tuyère est très sensiblement inférieure à la pression ambiante. Dans cette phase pendant laquelle la tuyère est sur-détendue et notamment au démarrage où la pression ambiante Pa correspond à la pression atmosphérique au niveau du sol, il existe un phénomène de décollement du jet par rapport à la paroi du divergent, qui limite le rapport de détente des gaz c'est-à-dire le rapport entre la pression Po dans la chambre de combustion et la pression statique des gaz Pe dans la section de sortie de la tuyère.

Afin d'éviter le phénomène de décollement de jet, on a déjà proposé par exemple dans le document FR-A-2 503 794 d'utiliser au démarrage et à basse altitude un divergent dont la section de sortie est réduite et qui est installé à l'intérieur d'un divergent présentant une plus grande section de sortie. Lorsque le moteur-fusée a atteint une altitude telle que le divergent de plus grande section de sortie peut fonctionner sans risque de décollement du jet, le divergent interne de section réduite est séparé et largué.

Un tel système d'adaptation d'une tuyère de moteur-fusée n'est pas entièrement satisfaisant car il implique un raccordement du petit divergent interne au niveau du col de la tuyère, qui est à une température très élevée, ce qui rend la réalisation relativement complexe. La réalisation de deux divergents complets emboîtés à la façon de poupées gigognes tend par ailleurs à augmenter la masse de l'ensemble.

Il a encore été proposé, notamment par les documents FR-A-2 568 316 et FR-A-2 457 390 de réaliser des tuyères à géométrie variable comprenant un premier divergent de relativement faible longueur et faible section de sortie utilisé dans une première phase de vol à partir du sol, et un ou plusieurs tronçons de divergent qui viennent se raccorder au premier divergent, en aval de celui-ci pour le prolonger en créant une section de sortie plus grande lorsque le moteur-fusée a atteint une certaine altitude pour laquelle la pression ambiante est réduite. De tels types de tuyères à divergent déployable permettent d'améliorer l'adaptation du moteur-fusée à différentes phases du vol, mais impliquent également un accroissement de la complexité de réalisation, du coût et de la masse embarquée et ne garantissent pas toujours une sécurité de fonctionnement suffisante compte tenu de la fragilité des mécanismes de déploiement et de la difficulté à réaliser un alignement correct des différents tronçons de divergent en présence des charges de recollement du jet sur les tronçons.

L'utilisation sur un moteur-fusée, d'un divergent déployable présente aussi, en dehors des problèmes liés au système de déploiement proprement dit, des contraintes au niveau de l'architecture moteur.

Il est encore connu, notamment par les documents US-A-3 925 982 ou FR-A-2 618 488, d'utiliser un divergent à rapport de section fixé, dont la section de sortie relativement importante optimise le fonctionnement en altitude dans un environnement à pression externe faible, et de mettre en oeuvre des moyens pour stabiliser au démarrage et dans une première phase de vol à faible altitude le décollement du jet de gaz par rapport à la paroi du divergent, à une distance déterminée de la section de sortie. On a toutefois jusqu'à présent proposé de stabiliser le décollement de jet essentiellement à l'aide d'une injection de fluide sous une forme d'anneau à travers la paroi du divergent. L'obligation d'utiliser un fluide et de commander son injection à l'intérieur du divergent accroissent la complexité du système et tendent à diminuer sa fiabilité.

Objet et description succincte de l'invention

La présente invention vise à remédier aux inconvénients précités et à permettre une bonne adaptation d'une tuyère de moteur-fusée à différentes conditions de vol depuis le sol jusqu'à une altitude où la pression ambiante est réduite, sans qu'il soit mis en oeuvre de pièce complémentaire au voisinage du col de la tuyère, ni de mécanisme de déploiement de pièces d'extension de divergent, ni de système d'injection de fluide.

L'invention vise à conférer à une tuyère de moteur-fusée un bon degré d'adaptabilité avec un rendement global satisfaisant à l'aide exclusivement de moyens statiques permettant de remédier aux problèmes liés au phénomène de décollement de jet.

Ces buts sont atteints grâce à une tuyère de moteur-fusée à diffuseur éjectable, comprenant une partie convergente recevant les gaz produits dans une chambre de combustion, un col de tuyère de section réduite (So) et un divergent raccordé au col de tuyère et se terminant à sa partie aval par une section de sortie du jet de gaz (Se) définissant un rapport de section ($\varepsilon$ = Se/So) élevé supérieur à environ 50,

caractérisée en ce que le divergent est prolongé dans sa partie aval par un diffuseur éjectable qui présente en aval de la zone de raccordement au divergent une zone de section ($S_1$) réduite pour assurer, dans une première phase de vol en présence d'une pression extérieure significative, une recompression de l'écoulement de gaz chauds et empêcher l'apparition d'un décollement de l'écoulement le long de la paroi du divergent.

La section ($S_1$) de la zone du diffuseur de section réduite constitue de l'ordre de 15 à 45% de la section de sortie (Se) du divergent.

En pratique, la section la plus réduite du diffuseur largable doit correspondre sensiblement à la section du divergent dans la zone où se produirait un décollement du jet de gaz, à basse altitude, en l'absence de diffuseur.

L'invention, grâce à l'adjonction d'un diffuseur largable, qui assure une recompression de l'écoulement, permet d'éviter l'apparition d'un décollement du jet une fois passée la phase transitoire d'allumage et empêche ainsi l'apparition de charge dissymétrique sur le divergent.

Une fois que le moteur-fusée se trouve à une altitude suffisante pour qu'un décollement de jet ne soit plus susceptible de se produire, le diffuseur est éjecté de manière à laisser au jet la possibilité de s'épanouir sur toute la section de sortie du divergent. L'éjection du diffuseur peut se faire facilement puisque celui-ci est extérieur au divergent et ne pénètre pas dans le divergent.

Selon un premier mode de réalisation possible, le diffuseur éjectable présente une forme essentiellement tronconique avec un angle d'inclinaison ($\alpha$) inférieur ou égal à environ 20° par rapport à une direction parallèle à l'axe de la tuyère.

Selon un autre mode de réalisation avantageux, le diffuseur éjectable présente un col profilé qui constitue ladite zone de section ($S_1$) réduite.

Le diffuseur à col peut présenter en amont du col une section d'entrée à profil galbé pour assurer une recompression plus progressive de l'écoulement.

Le diffuseur éjectable peut être monobloc ou réalisé en plusieurs parties.

Selon une caractéristique particulière de l'invention, un système de cloisons ou nervures est installé à l'intérieur de la partie aval du divergent et du diffuseur pour à la fois restreindre d'éventuelles circulations des gaz dans le sens circonférentiel pendant les phases transitoires d'allumage, assurer un renfort de la paroi du divergent et un maintien du diffuseur et servir de guidage lors de l'éjection du diffuseur.

Selon un premier mode de réalisation possible, le divergent comprend sur sa face interne des nervures longitudinales qui se prolongent au-delà de l'extrémité aval et coopèrent avec des rainures longitudinales formées sur la face interne du diffuseur largable.

Selon un autre mode de réalisation possible, qui facilite le guidage lors de l'éjection du diffuseur, le diffuseur largable comprend sur sa face interne des nervures longitudinales qui se prolongent au-delà de l'extrémité amont du diffuseur et coopèrent avec des rainures longitudinales formées sur la face interne du divergent.

Le diffuseur largable comprend des moyens de liaison sélective avec l'extrémité aval du divergent.

La rupture de ces moyens de liaison peut être commandée à distance par des moyens pyrotechniques, pneumatiques ou électriques.

Selon un autre mode de réalisation possible, les moyens de liaison entre le diffuseur largable et l'extrémité aval du divergent comprennent des moyens configurés de manière à se rompre automatiquement après un temps de fonctionnement prédéterminé.

Ces moyens à rupture automatique peuvent comprendre par exemple des pièces en matériau composite abradable

Selon un mode de réalisation particulier, les moyens de liaison entre le diffuseur largable et l'extrémité aval du divergent comprennent un ensemble d'étriers articulés pinçant des brides formées aux extrémités en contact du divergent et du diffuseur largable et un système de retenue des étriers équipé de moyens de déverrouillage commandés selectivement pour permettre le largage du diffuseur lorsque le risque de décollement du jet de gaz à l'intérieur du divergent à disparu.

Brève description des dessins

D'autres caractéristiques et avantages de l'invention ressortiront de la description suivante de modes particuliers de réalisation donnés à titre d'exemples, en référence aux dessins annexés, sur lesquels :

- la figure 1A est une vue schématique en demi-coupe axiale d'une tuyère selon un premier mode de réalisation de l'invention avec diffuseur à col, lors d'une phase transitoire d'allumage initiale,
- la figure 1B est une vue analogue à la figure 1A lors d'une phase de vol à basse altitude pour laquelle le diffuseur à col assure un recollement du jet de gaz le long de la paroi du divergent,
- la figure 2 est une vue schématique en demi-coupe axiale d'une tuyère selon un deuxième mode de réalisation de l'invention avec diffuseur tronconique lors d'une phase de vol à basse altitude pour laquelle le diffuseur empêche un décollement du jet de gaz dans le divergent,
- la figure 3 est une vue en perspective éclatée montrant un exemple particulier de réalisation d'une tuyère selon l'invention avec un diffuseur à col coopérant avec un divergent muni de nervures longitudinales,
- la figure 4 est une vue en perspective éclatée montrant un autre exemple particulier de réalisation d'une tuyère selon l'invention avec un diffuseur à col muni de nervures longitudinales coopérant avec un divergent,

- la figure 5 est une vue en coupe selon la ligne V-V de la figure 1B montrant un diffuseur à col en plusieurs parties,
- la figure 6 est une vue en coupe axiale montrant une partie d'un exemple de système de liaison entre un diffuseur largable et la partie aval du divergent d'une tuyère selon l'invention, et
- la figure 7 est une vue en perspective d'une partie montrant l'exemple de système de liaison de la figure 6.

Description détaillée de modes particuliers de réalisation de l'invention

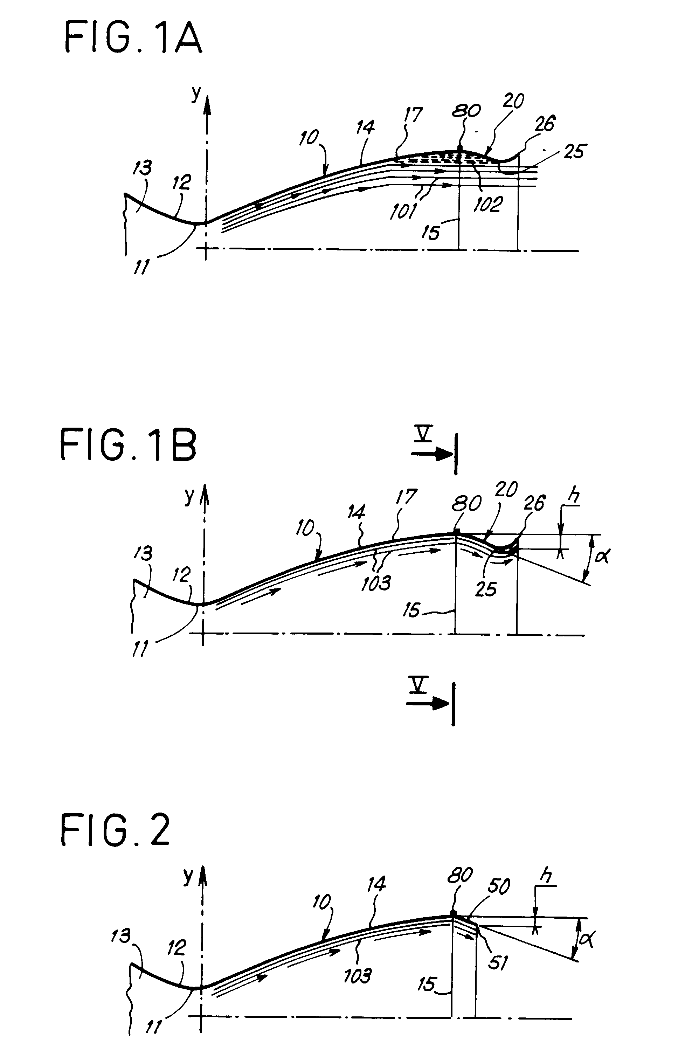

Les figures 1A, 1B et 2 montrent la forme générale d'une tuyère 10 de moteur-fusée comprenant une partie convergente amont 12 recevant les gaz chauds produits dans une chambre de combustion 13, un col de tuyère 11, et un divergent 14 qui assure la détente des gaz chauds en aval du col 11 et leur éjection au niveau de l'extrémité aval 15 du divergent qui présente une section de sortie Se.

Le rapport de section $\varepsilon$ entre la section de sortie Se du divergent et la section So de passage des gaz chauds au niveau du col de tuyère 11 définit un taux de détente. Le rapport de détente de la tuyère 10 est en effet défini par le rapport entre la pression Po dans la chambre de combustion et la pression statique des gaz Pe dans la section de sortie de la tuyère, et le rapport de détente dépend directement du rapport de section $\varepsilon$.

On cherche en général à avoir un rapport de détente, donc un rapport de section $\varepsilon$ le plus grand possible, afin d'obtenir une poussée importante.

Comme cela a déjà été indiqué, la poussée n'est cependant maximale que si la tuyère est adaptée, c'est-à-dire si la pression statique des gaz Pe dans la section de sortie de la tuyère est égale à la pression du milieu ambiant Pa.

Si la tuyère est adaptée pour un fonctionnement à haute altitude, avec une pression ambiante Pa très faible, la tuyère est sur-détendue au niveau du sol où la pression statique Pe des gaz dans la section de sortie de la tuyère est très inférieure à la pression ambiante Pa qui est alors égale à 1 bar, et il se produit avec les divergents traditionnels un phénomène de décollement du jet des gaz chauds par rapport à la paroi du divergent 14. Ce phénomène de décollement du jet, par les dissymétries et instabilités des charges mécaniques qu'il provoque sur le divergent, peut conduire à une destruction du divergent.

C'est pourquoi on a déjà proposé soit de mettre en oeuvre des moyens assez complexes pour stabiliser le décollement du jet à l'aide de systèmes d'injection de gaz, soit plus généralement de limiter la longueur du divergent et sa section de sortie afin d'éviter à basse altitude le phénomène de décollement du jet. Ceci se traduit par une perte de poussée à haute altitude ou par l'obligation d'adjoindre à haute altitude des systèmes d'extension de tuyère qui compliquent fortement la structure de l'ensemble et la fragilisent.

On considérera à titre d'exemple une tuyère de moteur fusée classique d'un premier étage de lanceur, dont le rapport de section est limité à $\varepsilon=45$ afin de garantir qu'au sol ou à très basse altitude aucun décollement du jet ne peut se produire. Ceci correspond à une tuyère qui est adaptée à une pression extérieure de l'ordre de 0,4 bar mais est sous-détendue pour des pressions extérieures inférieures à 0,4bar, c'est-à-dire à des altitudes supérieures à 8 à 10km. La poussée reste ainsi limitée pour toutes les phases de vol à une altitude au-delà d'environ 10km.

L'invention offre un moyen simple d'améliorer l'adaptation d'une tuyère dans une plage de fonctionnement plus étendue en empêchant le phénomène de décollement de jet de se produire à basse altitude tout en autorisant une géométrie de tuyère présentant un rapport de section $\varepsilon$ élevé, par exemple de l'ordre de 80 à 100 assurant une bonne adaptation et par suite un gain de poussée aux altitudes élevées, au-delà de 10km environ, où la pression ambiante est réduite.

Pour cela, un diffuseur 20 (figures 1A et 1B) ou 50 (figure 2) est rattaché à l'extrémité aval 15 du divergent pour assurer une recompression de l'écoulement et éviter au décollement d'apparaître.

Le diffuseur 20 resp. 50 présente une section d'entrée égale à la section de sortie Se de l'extrémité aval 15 du divergent 14, et, en aval de cette section d'entrée, une zone 25 resp. 51 de section S1 plus réduite que celle de la section de sortie Se du divergent 14.

La zone 25 resp. 51 du diffuseur 20 resp. 50 peut présenter une section réduite $S_1$ de l'ordre de 15 à 45 % plus faible que la section de sortie Se du divergent 14.

D'une manière générale la section réduite S1, doit correspondre à la section du divergent au niveau de laquelle apparaîtrait au voisinage du sol un décollement du jet pour un divergent non équipé d'un diffuseur 20 ou 50.

Si le décollement du jet, compte tenu des caractéristiques de la tuyère est par exemple susceptible d'apparaître au niveau d'une section S'1 du divergent définissant un rapport de section e1 = S1/So de l'ordre de 45, la zone réduite 25 resp. 51 du diffuseur 20 resp. 50 devra présenter une section S1 voisine de la section S'1.

Comme on peut le voir sur les figures 1A et 1B et 2, le diffuseur 20, resp. 50 peut présenter diverses formes.

Selon un premier mode de réalisation, représenté sur les figures 1A, 1B et 3 à 5, le diffuseur largable 20 rapporté à l'extrémité aval 15 du divergent 14 et rattaché à celui-ci par des moyens de liaison temporaire 80 est profilé de manière à présenter un col 25 définissant la zone de section réduite. La partie du diffuseur 20 située en amont du col 25 peut être galbée pour rendre la recompression plus progressive jusqu'au col 25. Le diffuseur 20 se termine par une partie aval 26 s'évasant par rapport au col 25.

Le profil du diffuseur 20 est tel qu'il présente une pente maximale (angle $\alpha$) d'environ 20° par rapport à une direction parallèle à l'axe de la tuyère. L'angle $\alpha$ peut par exemple être compris entre 5 et 10°.

La distance transversale h entre le col 25 et une ligne prolongeant axialement l'extrémité aval 15 du divergent peut être par exemple de l'ordre de 10 à 40 cm mais dépend naturellement des dimensions du divergent 14.

Sur la figure 1A on a représenté l'écoulement 101 du jet de gaz chauds dans le divergent 14 lors d'une phase transitoire initiale d'allumage au niveau du sol. Le jet de gaz a dans un premier temps tendance à se décoller de la paroi du divergent 14, dans une zone 17 correspondant par exemple à une pression des gaz de l'ordre de 0,4 bar, compte tenu de la pression extérieure de l'ordre de 1 bar qui est supérieure aux conditions de non décollement de jet. Il se forme alors dans un premier temps en aval de la zone 17 une zone morte 102 sans écoulement au voisinage de la paroi de la partie aval du divergent.

Immédiatement après la phase transitoire initiale, la zone morte 102 est purgée et l'écoulement 103 du jet (figure 1B) retrouve normalement stable et collé à la paroi du divergent 14 puis du diffuseur 20 jusqu'à la sortie 26 du diffuseur.

Lorsque le moteur-fusée se trouve à une altitude suffisante, par exemple de l'ordre de 10km, pour laquelle la pression extérieure est suffisamment basse pour qu'aucun risque de décollement de jet ne puisse se produire dans le divergent 14. Le diffuseur 20 est séparé du divergent 14 au niveau des moyens de liaison 80 pour être éjecté et dégager toute la section de sortie Se à l'extrémité aval 15 du divergent 14.

L'invention permet ainsi d'optimiser le divergent 14 pour un fonctionnement à haute altitude grâce à la section de sortie importante tout en maintenant un bon rendement pendant toutes les phases du vol, le diffuseur 20 empêchant le décollement de jet à basse altitude.

On notera qu'il existe diverses méthodes classiques de prévision du lieu de décollement de jet dans une tuyère axisymétrique et que la difficulté consiste non pas à prévoir le lieu de décollement mais à maîtriser ou de préférence empêcher le décollement afin d'empêcher des instabilités d'apparaître.

Les méthodes de détermination du lieu de décollement de jet utilisent des critères qui relient les propriétés de l'écoulement en amont du décollement à des caractéristiques de l'écoulement en aval du décollement. Une méthode habituelle consiste à calculer l'écoulement dans la tuyère en fluide non visqueux, pour déterminer les caractéristiques de l'écoulement près de la paroi, puis à appliquer l'un des critères de décollement.

A titre d'exemple, si Mo représente le nombre de Mach de l'écoulement avant le décollement et $P_2$ et $P_1$ représentent les pressions statiques après et avant le décollement, on peut choisir les critères de décollement suivants :

critère de Zukoski

$$\frac{P_2}{P_1} = 1 + \frac{Mo}{2}$$

critère de Summerfield

$$\frac{P_1}{P_2} = (1,88 Mo-1)^{-0,64}$$

La pression statique $P_2$ en aval du décollement peut être prise égale à la pression extérieure.

En première approximation le nombre de Mach Mo peut être choisi égal à 3.

On a ainsi la condition

$$\frac{P_1}{P_2} \simeq 0,4.$$

Au voisinage du sol, quand la pression extérieure $P_2$ est voisine de 1 bar, le décollement se produit ainsi lorsque la pression statique $P_1$ de l'écoulement du gaz éjecté atteint ou descend en dessous d'environ 0,4 bar.

La figure 2 montre un deuxième mode de réalisation de l'invention dans lequel on utilise un diffuseur 50 de forme essentiellement tronconique. Dans ce cas, comme pour le diffuseur à col 20, la section d'entrée du diffuseur conique 50 correspond à la section de sortie du divergent 14, mais la zone rétrécie de section $S_1$ du diffuseur 50 est constituée par la section de sortie de celui-ci. Le diffuseur 50 est relié au divergent 14 par des moyens de liaison temporaire 80 comme le diffuseur à col 20.

Le diffuseur tronconique 50 présente une inclinaison a inférieure ou égale à 20° par rapport à une direction parallèle à l'axe de la tuyère.

Comme le col 25 du diffuseur 20, l'extrémité aval 51 du diffuseur tronconique 50 peut se situer à une distance transversale h comprise entre environ 10 et 40cm par rapport à une direction parallèle à l'axe de la tuyère et passant par l'extrémité aval 15 de la tuyère.

Le phénomène de recompression des gaz produit par le diffuseur tronconique 50 est analogue à celui produit par le diffuseur à col 20 et ne sera pas décrit à nouveau. Le diffuseur 50 est également séparé du divergent 14 et éjecté lorsque le moteur-fusée a atteint une altitude suffisante pour que le jet reste naturellement collé.

Une tuyère selon l'invention présente deux niveaux d'adaptation, d'une part à basse altitude en présence d'un diffuseur, et d'autre part à haute altitude, après éjection du diffuseur, grâce à un divergent de grande section de sortie.

Cette double adaptation est rendue possible à l'aide de l'adjonction simple d'un élément statique, à savoir, le diffuseur 20 ou 50, pendant la première phase du vol.

Cette technique présente l'avantage de permettre l'utilisation de différents divergents existants et de pouvoir les adapter à différents types de tirs en adjoignant des diffuseurs de caractéristiques différentes.

La présence d'un diffuseur en sortie du divergent dans la première phase de vol permet en outre d'assurer une rigidification du divergent et de l'aider à supporter les efforts de la pression extérieure. Par ailleurs, le largage du diffuseur 20 ou 50 ne risque pas d'endommager le divergent 14, puisque le diffuseur est toujours placé en sortie du divergent.

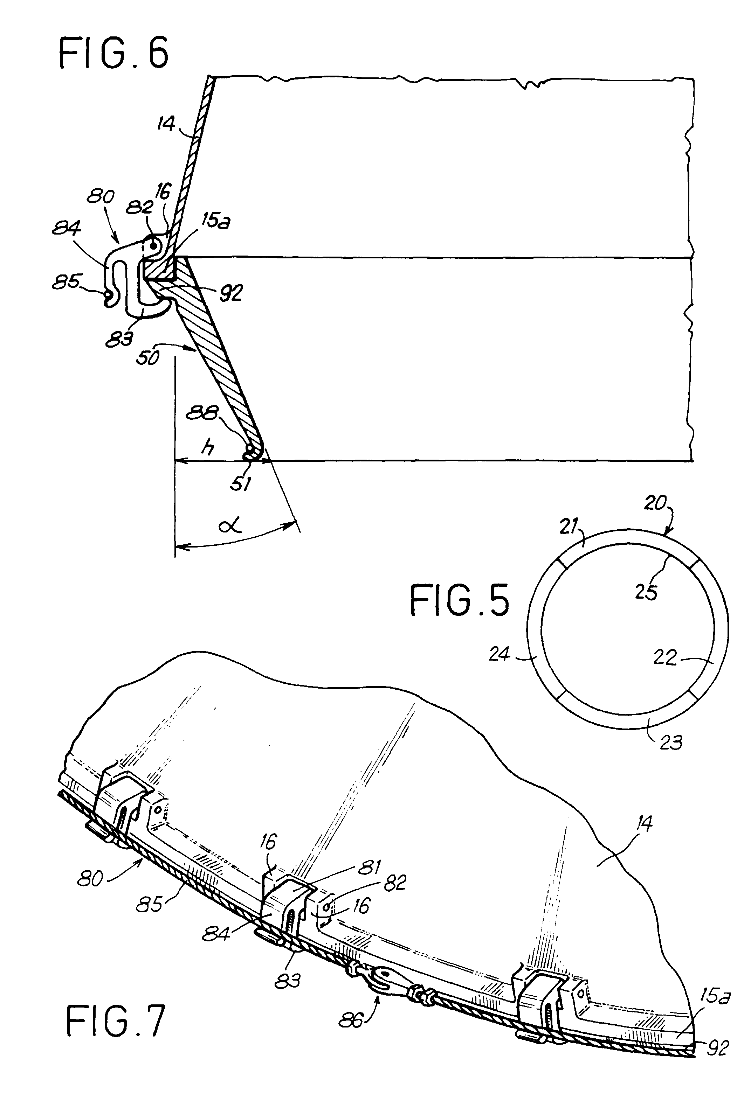

Le diffuseur 20 ou 50 peut être monobloc ou comme cela est représenté sur la figure 5, comporter plusieurs éléments, tels que les tronçons 21 à 24, qui facilitent la fabrication.

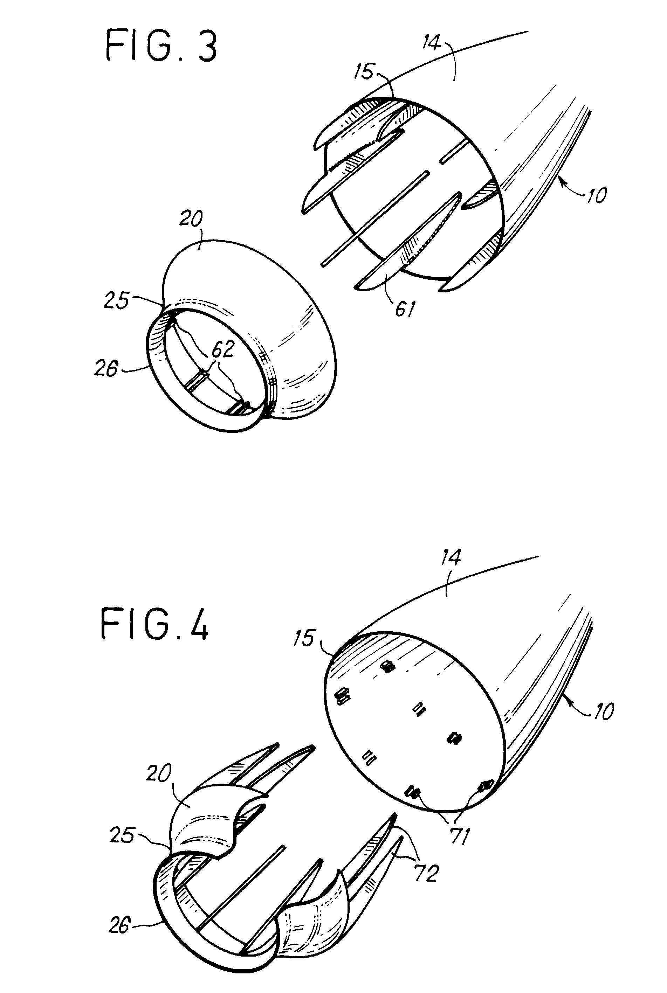

Sur les figures 3 et 4 on a représenté la mise en oeuvre de cloisons longitudinales 61,72 assurant un guidage du diffuseur 20 par rapport au divergent 14. Les figures 3 et 4, qui sont des vues éclatées montrant le diffuseur 20 séparé du divergent 14, concernent un diffuseur 20 à col 25, mais des cloisons 61,72 pourraient de la même manière être installées dans un mode de réalisation à diffuseur tronconique 50.

La figure 3 montre des cloisons ou nervures 61 qui sont disposées longitudinalement et fixées sur la partie aval de la face interne du divergent 14. Les nervures 61, qui sont régulièrement réparties à la périphérie du divergent 14 et peuvent être par exemple au nombre de 6 à 12, se projettent au-delà de l'extrémité aval 15 du divergent 14 pour pénétrer à l'intérieur du diffuseur 20 et s'engager dans des rainures correspondantes 62 formées sur la face interne du diffuseur. Les nervures 61 servent à la fois à rigidifier le divergent, renforcer la liaison entre le diffuseur 20 et le divergent 14, à guider le diffuseur 20 lors de son éjection, et à limiter les recirculations des gaz chauds.

La figure 4 montre un mode de réalisation très semblable à celui de la figure 3, mais dans lequel des nervures ou cloisons 72 sont solidaires du diffuseur 20 et se projettent en amont de ce diffuseur pour pénétrer dans des rainures correspondantes 71 formées dans la partie aval de la face interne du divergent 14. Les nervures 72 de la figure 4 jouent exactement le même rôle que les nervures 61 de la figure 3.

Les figures 6 et 7 montrent un exemple particulier de liaison 80 entre un diffuseur 50, représenté sous la forme d'un diffuseur tronconique mais qui pourrait également être un diffuseur 20 à col, et l'extrémité aval 15 d'un divergent 14.

D'une manière générale, les moyens de liaison 80 sont prévus pour être rompus après un temps de fonctionnement prédéterminé lorsque le moteur-fusée a atteint une altitude suffisante pour laquelle la pression extérieure est réduite. Dès la rupture des moyens de liaison 80, ce diffuseur est séparé du divergent 14 et éjecté.

La rupture des moyens de liaison 80 peut s'effectuer par une télécommande à l'aide de moyens pyrotechniques, pneumatiques ou électriques. Il est par exemple possible d'utiliser un cordeau pyrotechnique ou des boulons explosifs.

La commande de la rupture des moyens de liaison 80 peut aussi intervenir automatiquement après un temps prédéterminé, par exemple de l'ordre de plusieurs dizaines de secondes, grâce à la mise en oeuvre d'un élément de verrouillage réalisé par exemple en matériau composite abradable. La commande de la rupture des moyens de liaison 80 peut ainsi être de type actif ou passif.

Selon un mode particulier de réalisation, une mousse vaporisable peut être ajoutée sur le diffuseur 20 ou 50 afin de refroidir des boulons explosifs pendant un temps prédéterminé jusqu'au moment de la commande de la rupture des moyens de liaison 80.

Sur l'exemple de réalisation de moyens de liaison 80, des figures 6 et 7, on voit l'extrémité aval 15 du divergent 14 qui est munie d'une bride 15a tandis que l'extrémité amont du diffuseur 50 présente elle-même une bride 92. Les brides 15a et 92 sont maintenues par des cavaliers 81 articulés autour d'axes 82 montés sur des chapes 16 formées à l'extrémité aval du divergent 14.

Chaque cavalier ou étrier 81 peut comprendre un crochet 83 engagé sous la bride 92 et une languette extérieure 84 munie d'une gorge recevant un câble 85 qui entoure l'extrémité aval du divergent 14 et se trouve relié à un système 86 de tension et de déverrouillage. Lorsqu'un déverrouillage est provoqué au niveau du système 86, le câble 85 est détendu, libérant les cavaliers 81 qui en se relevant permettent l'éjection du diffuseur 50.

Lorsque le diffuseur 20 ou 50 est formé en plusieurs parties, l'extrémité aval 51 du diffuseur 50 (figure 6) peut retenir une frette 88 assurant le maintien mécanique des diverses parties.

## Revendications

1. Tuyère de moteur-fusée à diffuseur éjectable pour premier étage de lanceur, comprenant une partie convergente (12) recevant les gaz produits dans une chambre de combustion (13), un col de tuyère (11) de section réduite (So) et un divergent (14) raccordé au col de tuyère (11) et se terminant à sa partie aval (15) par une section de sortie des gaz (Se) définissant un rapport de section ($\varepsilon$ = Se/So) élevé supérieur à environ 50, caractérisée en ce que le divergent (14) est prolongé dans sa partie aval par un diffuseur (20; 50) éjectable qui présente en aval de la zone de raccordement au divergent (14) une zone (25;51) de section ($S_1$) réduite pour assurer, dans une première phase de vol en présence d'une pression extérieure significative, une recompression de l'écoulement de gaz chauds et empêcher l'apparition d'un décollement de l'écoulement le long de la paroi du divergent.

2. Tuyère selon la revendication 1, caractérisée en ce que la section ($S_1$) de la zone (25;51) du diffuseur (20;50) de section réduite constitue de l'ordre de 15 à 45% de la section de sortie (Se) du divergent (14).

3. Tuyère selon la revendication 1 ou la revendication 2, caractérisée en ce que le diffuseur éjectable (50) présente une forme essentiellement tronconique avec un angle d'inclinaison ($\alpha$) inférieur ou égal à environ 20° par rapport à une direction parallèle à l'axe de la tuyère.

4. Tuyère selon la revendication 1 ou la revendication 2, caractérisée en ce que le diffuseur éjectable (20) présente un col profilé (25) qui constitue ladite zone de section ($S_1$) réduite.

5. Tuyère selon l'une quelconque des revendications 1 à 4, caractérisée en ce que le diffuseur éjectable (20;50) est réalisé en plusieurs parties (21 à 24).

6. Tuyère selon l'une quelconque des revendications 1 à 5, caractérisée en ce que le divergent (14) comprend sur sa face interne des nervures longitudinales (61) qui se prolongent au-delà de l'extrémité aval et coopèrent avec des rainures longitudinales (62) formées sur la face interne du diffuseur largable (20;50).

7. Tuyère selon l'une quelconque des revendications 1 à 5, caractérisée en ce que le diffuseur largable (20;50) comprend sur sa face interne des nervures longitudinales (72) qui se prolongent au-delà de l'extrémité amont du diffuseur et coopèrent avec des rainures longitudinales (71) formées sur la face interne du divergent (14).

8. Tuyère selon l'une quelconque des revendications 1 à 7, caractérisée en ce que le diffuseur largable (20;50) comprend des moyens (80) de liaison sélective avec l'extrémité aval (15) du divergent (14), et en ce que la rupture de ces moyens de liaison (80) est commandé à distance.

9. Tuyère selon l'une quelconque des revendications 1 à 7, caractérisée en ce que les moyens (80) de liaison entre le diffuseur largable (20;50) et l'extrémité aval (15) du divergent (14) comprennent des moyens configurés de manière à se rompre automatiquement après un temps de fonctionnement prédéterminé.

10. Tuyère selon l'une quelconque des revendications 1 à 7, caractérisée en ce que les moyens de liaison (80) entre le diffuseur largable (20;50) et l'extrémité aval (15) du divergent (14) comprennent un ensemble d'étriers (81) articulés pinçant des brides (15a, 92)) formées aux extrémités en contact du divergent (14) et du diffuseur largable (20;50) et un système (85,86) de retenue des étriers équipé de moyens de déverrouillage commandés selectivement pour permettre le largage du diffuseur (20;50) lorsque le risque de décollement du jet de gaz à l'intérieur du divergent (14) a disparu.

**Patentansprüche**

1. Raketendüse mit abwerfbarem Diffusor für die erste Trägerraketenstufe, mit einem konvergierenden Abschnitt (12), der die Gase, die in einer Brennkammer (13) erzeugt werden, aufnimmt, einem Düsenhals (11) mit verringertem Querschnitt (So) und einem divergierenden Abschnitt (14), der mit dem Düsenhals (11) verbunden ist und in seinem stromabwärts gelegenen Abschnitt (15) in einem Gas-Austrittsquerschnitt (Se) endet, der ein erhöhtes Querschnittsverhältnis ($\varepsilon$ = Se/So) festlegt, das größer als etwa 50 ist,

dadurch gekennzeichnet, daß der divergierende Abschnitt (14) in seinem stromabwärts gelegenen Teil um einen abwerfbaren Diffusor (20; 50) verlängert ist, der stromabwärts von dem Bereich der Verbindung mit dem divergierenden Abschnitt (14) eine Zone (25; 51) mit verringertem Querschnitt ($S_1$) aufweist, um in einer ersten Flugphase bei Vorliegen eines beträchtlichen Außendrucks eine erneute Verdichtung der Strömung heißer Gase sicherzustellen und das Auftreten einer Strömungsablösung längs der Wand des divergierenden Abschnitts zu verhindern.

2. Düse nach Anspruch 1, dadurch gekennzeichnet, daß der Querschnitt ($S_1$) der Zone (25; 51) des Diffusors (20; 50) mit verringertem Querschnitt in der Größenordnung von 15 bis 45% des Austrittsquerschnitts (Se) des divergierenden Abschnitts (14) liegt.

3. Düse nach Anspruch 1 oder Anspruch 2, dadurch gekennzeichnet, daß der abwerfbare Diffusor (50) eine im wesentlichen kegelstumpfförmige Gestalt aufweist, mit einem Neigungswinkel ($\alpha$), der kleiner oder gleich ist etwa 20° in Bezug auf eine Richtung parallel zur Düsenachse.

4. Düse nach Anspruch 1 oder Anspruch 2, dadurch gekennzeichnet, daß der abwerfbare Diffusor (20) einen profilierten Hals (25) aufweist, der die genannte Zone mit verringertem Querschnitt ($S_1$) bil-

det.

**5.** Düse nach irgendeinem der Ansprüche 1 bis 4, dadurch gekennzeichnet, daß der abwerfbare Diffusor (20; 50) aus mehreren Teilen (21 bis 24) gebildet ist.

**6.** Düse nach irgendeinem der Ansprüche 1 bis 5, dadurch gekennzeichnet, daß der divergierende Abschnitt (14) auf seiner Innenfläche Längsrippen (61) aufweist, die sich über das stromabwärtsgelegene Ende verlängern und mit Längsrillen (62) zusammenwirken, die auf der Innenfläche des abwerfbaren Diffusors (20; 50) ausgebildet sind.

**7.** Düse nach irgendeinem der Ansprüche 1 bis 5, dadurch gekennzeichnet, daß der abwerfbare Diffusor (20; 50) auf seiner Innenfläche Längsrippen (72) aufweist, die sich über das stromaufwärtsgelegene Ende des Diffusors verlängern und mit Längsrillen (71) zusammenwirken, die auf der Innenfläche des divergierenden Abschnitts (14) ausgebildet sind.

**8.** Düse nach irgendeinem der Ansprüche 1 bis 7, dadurch gekennzeichnet, daß der abwerfbare Diffusor (20; 50) wahlweise betätigbare Mittel (80) zur Verbindung mit dem stromabwärts gelegenen Ende (15) des divergierenden Abschnitts (14) aufweist, und daß das Auseinandertrennen dieser Mittel (80) zur Verbindung ferngesteuert ist.

**9.** Düse nach irgendeinem der Ansprüche 1 bis 7, dadurch gekennzeichnet, daß die Mittel (80) zur Verbindung zwischen dem abwerfbaren Diffusor (20; 50) und dem stromabwärtsgelegenen Ende (15) des divergierenden Abschnitts (14) Mittel aufweisen, die derart ausgebildet sind, daß sie sich automatisch nach einer vorbestimmten Funktionsdauer auseinandertrennen.

**10.** Düse nach irgendeinem der Ansprüche 1 bis 7, dadurch gekennzeichnet, daß die Mittel (80) zur Verbindung zwischen dem abwerfbaren Diffusor (20; 50) und dem stromabwärtsgelegenen Ende (15) des divergierenden Abschnitts (14) eine Gruppe gelenkig gelagerter Bügel (81) aufweisen, die Flansche (15a, 92)) zusammenklemmen, die an den in Berührung stehenden Enden des divergierenden Abschnitts (14) und des abwerfbaren Diffusors (20; 50) ausgebildet sind, sowie ein Haltesystem (85, 86) für die Bügel, das mit Entriegelungsmitteln ausgestattet ist, die wahlweise angesteuert werden, um den Abwurf des Diffusors (20; 50) zu gestatten, wenn die Gefahr der Ablösung des Gasstrahls im Inneren des divergierenden Abschnitts (14) verschwunden ist.

**Claims**

**1.** A rocket engine nozzle with an ejectable diffuser for the first stage of a launcher, comprising a convergent portion (12) which receives the gases produced in a combustion chamber (13), a nozzle throat (11) of small cross-section (So) and a diverging part (14) connected to the nozzle throat (11) and terminating at its downstream portion (15) in a gas outlet cross-section (Se) which defines a high cross-section ratio ($\varepsilon$ = Se/So) greater than about 50,

characterised in that the downstream portion of the diverging part (14) is extended by an ejectable diffuser (20; 50) which, downstream from the zone where it is connected to the diverging part (14), presents a zone (25; 51) of smaller cross-section ($S_1$) that acts during a first stage of flight in the presence of significant outside pressure to recompress the flow of hot gases and to prevent a flow separation from appearing along the wall of the diverging part.

**2.** The nozzle according to claim 1, characterised in that the cross-section ($S_1$) of the zone (25; 51) of the diffuser (20; 50) of smaller cross-section constitutes about 15% to 45% of the outlet cross-section (Se) of the diverging part (14).

**3.** The nozzle according to claim 1 or claim 2, characterised in that the ejectable diffuser (50) has an essentially frusto-conical shape with an angle of inclination ($\alpha$) less than or equal to about 20° with respect to a direction parallel to the axis of the nozzle.

**4.** The nozzle according to claim 1 or claim 2, characterised in that the ejectable diffuser (20) has a streamlined throat (25) which constitutes said zone of smaller cross-section ($S_1$).

**5.** The nozzle according to any one of claims 1 to 4, characterised in that the ejectable diffuser (20; 50) is made up of a plurality of parts (21 to 24).

**6.** The nozzle according to any one of claims 1 to 5, characterised in that the inside surface of the diverging part (14) includes longitudinal ribs (61) which extend beyond its downstream end and cooperate with longitudinal grooves (62) formed on the inside surface of the releasable diffuser (20; 50).

**7.** The nozzle according to any one of claims 1 to 5, characterised in that the inside surface of the releasable diffuser (20; 50) includes longitudinal ribs (72) which extend beyond the upstream end of the diffuser and co-operate with longitudinal grooves (71) formed on the inside surface of the diverging part (14).

8. The nozzle according to any one of claims 1 to 7, characterised in that the releasable diffuser (20; 50) comprises means (80) for selectively connecting it to the downstream end (15) of the diverging part (14) and in that the rupture of these connection means (80) is remotely controlled.

9. The nozzle according to any one of claims 1 to 7, characterised in that the means (80) for connecting the releasable diffuser (20;50) to the downstream end (15) of the diverging part (14) comprise means configured so as to break automatically after a predetermined operating time.

10. The nozzle according to any one of claims 1 to 7, characterised in that the means (80) for connecting the releasable diffuser (20;50) to the downstream end (15) of the diverging part (14) comprise an assembly of hinged clamps (81) which grip flanges (15a, 92) formed at the contacting ends of the diverging part (14) and of the releasable diffuser (20; 50), and a retaining system (85, 86) for the clamps which is equipped with unlocking means selectively controllable to allow release of the diffuser (20; 50) once the risk of separation of the gas jet inside the diverging part (14) has passed.

FIG.1A

FIG.1B

FIG.2

FIG. 3

FIG.4

EP 0 632 197 B1

FIG.6

FIG.5

FIG.7